# EUROPÄISCHE PATENTANMELDUNG

(11) **EP 2 594 378 A2**
(43) Veröffentlichungstag der Anmeldung: **22.05.2013**
(21) Anmeldenummer: 12007337.4
(22) Anmeldetag: 26.10.2012
(51) Int. Cl.: B28D 1/04, B28D 7/04, E21B 25/10

(54) **Bohrkernhalter und Hohlkernbohrverfahren unter Verwendung eines Bohrkernhalters**

(30) Priorität: 17.11.2011 DE 102011118771
(71) Anmelder: Ortner, Siegfried, 86473 Ziemetshausen (DE)
(72) Erfinder: Ortner, Siegfried, 86473 Ziemetshausen (DE)
(74) Vertreter: Munk, Ludwig Hubert

(57) **Zusammenfassung**

Die Erfindung betrifft einen Bohrkernhalter für eine Hohlkernbohrer-Bohrkrone (3), mit einer Aufnahmehülse (1) und einem Kernhaltestift (2). Der Kernhaltestift (2), weist an seinem einen Ende einen Befestigungsabschnitt zur Befestigung am Bohrkern (5) auf, beispielsweise einen Gewindebolzenabschnitt zum Einschrauben in einen am Bohrkern (5) eingebrachten Dübel und/oder eine dort befestigte Mutter (2a). Die Aufnahmehülse (1) ist bohrkronenseitig befestigbar und weist eine Stiftaufnahmebohrung für den Kernhaltestift (2) auf, welche bei bohrkronenseitig befestigter Aufnahmehülse (1) mit dem Kühlmitteldurchtritt der Bohrkrone (3) fluchtet, und in der der eingesteckte Kernhaltestift (2) bei bohrkronenseitig befestigter Aufnahmehülse (1) gegen ein Herausrutschen zum Bohrkern (5) hin gesichert aufgenommen ist.

## Beschreibung

Die Erfindung betrifft einen Bohrkernhalter für eine Hohlkernbohrer-Bohrkrone, sowie ein Verfahren zum Hohlkernbohren unter Verwendung eines solchen Bohrkernhalters.

Im Trockenbau, insbesondere im Betonbaubereich, aber auch zum Durchbohren von Mauerwerk und dergleichen, werden, wenn große Bohrungsdurchmesser hergestellt werden sollen, hauptsächlich Hohlkernbohrer verwendet. Derartige Hohlkernbohrer haben Bohrkronen mit einem ringzylindrischen Mantel mit einem oder mehreren Zerspanungssegmenten an seinem einen Axialende und einem Anschlußstück bzw. einem Kupplungsabschnitt an dem anderen Ende, welcher meist mit einem den radialen Abstand zum ringzylindrischen Mantel überbrückenden Ringabschnitt an dem ringzylindrischen Mantel befestigt ist. Mit dem Anschlußstück bzw. Kupplungsabschnitt kann die Bohrkrone an einem Bohrkronenhalter einer Hohlkernbohrmaschine angebracht werden. Üblicherweise ist das Anschlußstück bzw. der Kupplungsabschnitt der Bohrkrone als Gewindestutzen mit einem Innengewinde ausgebildet, mit welchem es auf einen üblicherweise als Gewindebolzenabschnitt ausgebildeten Gegenkupplungsabschnitt am Bohrkronenhalter aufgeschraubt werden kann. Die Bohrung mit dem Innengewindeabschnitt am Anschlußstück der Bohrkrone ist dabei als Durchgangsbohrung ausgeführt, so dass durch diese Bohrung hindurch Kühlmittel bzw. -flüssigkeit zum ringförmigen Zerspanungsbereich der Bohrkrone geleitet werden kann, welches an der Bohrmaschine zugeführt und von dort durch eine zentrisch den Bohrkronenhalter durchdringende Kühlmittelbohrung zugeführt wird.

Es gibt für derartige Hohlkernbohrmaschinen Bohrkronen unterschiedlichen Durchmessers und Länge des Zylindermantels für eine große Anzahl von Bohrkerndurchmessern und auch für eine große Anzahl von gewünschten Bohrkernlängen, so dass alle im Baubereich gängigen Durchmesser und Mauer- bzw. Deckenstärken gebohrt werden können. Ein dabei entstehender Bohrkern kann ein beträchtliches Gewicht erreichen, z.B. 120kg.

Insbesondere bei vertikalen Bohrungen durch Geschossdecken oder dergleichen stellen die herausgeschnittenen Bohrkerne ein hohes Sicherheitsrisiko dar oder müssen aufwändig von unten abgestützt werden. Bei Horizontalbohrungen ist dagegen häufig die Entnahme des Bohrkerns mit einer Bohrkernzange schwierig.

Zur Überwindung dieser Nachteile ist in der deutschen Patentanmeldung DE 195 18 380 A1 eine Bohrkernfangvorrichtung für eine Kernbohrmaschine vorgeschlagen worden. Die Bohrkernfangvorrichtung weist eine am Bohrkern drehachszentrisch zur Drehachse der Kernbohrmaschine anschraubbare und drehachszentrisch durch die Bohrkrone und die Kernbohrmaschine geführte Kernhaltestange auf, die an einem galgenartigen Ständer oberhalb der Kernbohrmaschine drehbar, aber gegen ein Herunterfallen gesichert befestigt ist. Die Kernbohrmaschine weist ein Gehäuse mit einer sich rund um die Drehachse durch das Gehäuse erstreckenden Ausnehmung, in der eine vom Motor angetriebene Hohlwelle mit einem unterseitigen Schraubflansch gelagert ist, an dem die Bohrkrone über mehrere Schrauben angeschraubt ist. In der angetriebenen Hohlwelle ist ein stehendes Innenrohr gelagert, welches als Führung für den Kernhaltestange dient und sicherstellen soll, dass die Kernhaltestange bei Betrieb mit der drehenden Hohlwelle in Berührung kommt. Dadurch kann zwar die die Sicherheit beim Kernbohren erhöht werden. Der Aufbau ist jedoch relativ komplex und erfordert neben der Bohrkernfangvorrichtung eine spezielle Kernbohrmaschine.

Hiervon ausgehend ist es Aufgabe der vorliegenden Erfindung, einen mit einem Standard-Hohlkernbohrer und einer Standard-Bohrkrone der eingangs beschriebenen Art verwendbaren Bohrkernhalter und ein Hohlkernbohrverfahren unter Verwendung eines solchen Bohrkernhalters zu schaffen.

Diese Aufgabe wird hinsichtlich des Bohrkernhalters mit den Merkmalen des Anspruchs 1 gelöst, hinsichtlich des Hohlkernbohrverfahrens mit den Merkmalen des Anspruchs 9.

Der erfindungsgemäße Bohrkernhalter weist einen Kernhaltestift und eine bohrkronenseitig befestigbare Aufnahmehülse für den Kernhaltestift auf, in der der Kernhaltestift bei bohrkronenseitig montierter Aufnahmehülse und bei am Bohrkern befestigtem Kernhaltestift verliersicher, d.h. gegen Herausfallen aus seiner Aufnahme in der Aufnahmehülse in Richtung zum Bohrkern hin gesichert, aufgenommen ist.

Der Kernhaltestift weist dazu an seinem einen Ende einen Befestigungsabschnitt zur Befestigung an dem Bohrkern auf, also beispielsweise einen Gewindebolzenabschnitt zum Einschrauben in einen am Bohrkern eingebrachten Dübel und/oder eine dort befestigte Mutter. An den Befestigungsabschnitt schließt ein Stiftabschnitt an, mit dem der Abstand zwischen der Aufnahmehülse und dem Bohrkern überbrückt wird, also beispielsweise eine Fortsetzung des als Befestigungsabschnitt dienenden Gewindebolzenabschnitts oder ein Bolzenschaft. Am dem Befestigungsabschnitt entgegengesetzten Ende des Stiftabschnitts befindet sich ein in Radialrichtung nach außen über den Durchmesser des Kernhaltestifts im Stiftabschnitt vorspringender Anschlagabschnitt, also beispielsweise eine auf eine weitere Fortsetzung des Gewindebolzenabschnitts im Befestigungsabschnitt und im Stiftabschnitt aufgeschraubte Mutter oder ein Schraubenkopf. Die Aufnahmehülse weist eine Stiftaufnahmebohrung auf, welche im bohrkronenseitig montierten Zustand konzentrisch zum Kühlmitteldurchtritt der Bohrkrone bzw. zur Kühlmittelborung des Bohrkronenhalters verläuft.

Der Kernhaltestift kann dabei jedwede geeignete Bauform aufweisen. Wichtig ist dabei jedoch, dass er mit dem Befestigungsabschnitt und dem daran anschließenden Stiftabschnitt durch die mit dem Kühlmitteldurchtritt der Bohrkrone und der Kühlmittelbohrung des Bohrkronenhalters fluchtende Stiftaufnahmebohrung in der Aufnahmehülse passt, aber nicht mit seinem Anschlagabschnitt, wobei bei eingestecktem Kernhaltestift bevorzugt noch soviel Spiel zwischen Kernhaltestift und Aufnahmehülse ist, dass auch noch Kühlmittel durchtreten kann.

Die Aufnahmehülse für den Kernhaltestift mit der Stiftaufnahmebohrung ist bevorzugt zwischen der Bohrkrone und dem Bohrkronenhalter montierbar. Dazu kann sie einerseits einen Gegenkupplungsabschnitt zur Befestigung an dem eigentlich dem Bohrkronenhalter zugeordneten Kupplungsabschnitt der Bohrkrone aufweisen. Andererseits kann sie einen Kupplungsabschnitt zur Befestigung an dem eigentlich der Bohrkrone zugeordneten Gegenkupplungsabschnitt des Bohrkronenhalters aufweisen. Der Gegenkupplungsabschnitt und der Kupplungsabschnitt der Aufnahmehülse entsprechen also vorteilhaft den entsprechenden Abschnitten an gängigen Bohrkronen bzw. Bohrkronenhaltern. Der Gegenkupplungsabschnitt kann in diesem Sinne als Gewindebolzenabschnitt ausgeführt sein, der Kupplungsabschnitt als Gewindebohrungsabschnitt.

An der Stiftaufnahmebohrung kann dabei eine dem Kupplungsabschnitt der Aufnahmehülse, bzw. im montierten Zustand dem Bohrkronenhalter zugewandte Schulter oder dergleichen vorgesehen, an der eine Gegenanschlagsfläche für den Anschlagabschnitt des Kernhaltestifts ausgebildet ist.

Um den Bohrkern am Abstürzen zu hindern wird nun nach einem ersten Anbohren eines als auszubohrender Bohrkern vorgesehenen Boden- bzw. Wandabschnitts bis auf eine gewünschte Tiefe, also beispielsweise bis auf eine geringe Resttiefe, die ausreicht, dass der Bohrkern gerade nicht durchbricht, die Bohrmaschine mit dem Bohrkronenhalter abgenommen.

Danach kann dann die Aufnahmehülse des erfindungsgemäßen Bohrkernhalters an der Bohrkrone befestigt werden. Anschließend kann der Kernhaltestift durch die Stiftaufnahmebohrung der Aufnahmehülse gesteckt werden und mit seinem unteren Befestigungsabschnitt an dem Bohrkern bzw. an dem als auszubohrender Bohrkern vorgesehenen Bodenabschnitt befestigt werden, also beispielsweise in den dort zuvor verankerten Dübel eingeschraubt werden.

Ist die Aufnahmehülse zweiteilig, kann zunächst das Unterteil an der Bohrkrone befestigt werden, bevor der Kernhaltestift eingesteckt wird und dann das Hülsenoberteil auf das Hülsenunterteil gesetzt wird. Dies hat insbesondere dann Vorteile, wenn die Gegenanschlagsfläche am Hülsenunterteil vorgesehen ist, und der Anschlagabschnitt des Kernhaltestifts höhenverstellbar am Kernhaltestift vorgesehen ist, weil er dann besser zugänglich ist.

Ist der Anschlagabschnitt des Kernhaltestifts abnehmbar, so kann nach dem Vorbohren die Bohrkrone entnommen werden, dann der Kernhaltestift am angebohrten Bohrkern befestigt werden, und anschließend die Bohrkrone wieder über den am Bohrkern befestigten Kernhaltestift gestülpt und an der Bohrung angesetzt werden. Nach dem aufstecken der Aufnahmehülse bzw. im Fall einer zweiteiligen Aufnahmehülse des Aufnahmehülsenunterteils kann dann der Anschlagabschnitt auf den Kernhaltestift aufgesetzt, also z.B. ein als Mutter ausgebildeter Anschlagabschnitt aufgeschraubt werden. Dies hat den Vorteil, dass das Einschrauben in einen bohrkernseitigen Dübel leicht fällt, insbesondere wenn der Dübel erst nach dem Vorbohrschritt gesetzt wird und dadurch nicht der beim Vorbohrschritt auftretenden Verschlammung ausgesetzt ist.

Die Kernbohrmaschine wird anschließend mit ihrem Bohrkronenhalter an den Kupplungsabschnitt der Aufnahmehülse aufgesetzt und dort befestigt. Wrd nun mit am Bohrkern befestigtem Bohrkernhalter ganz durch die Wand bzw. den Boden durchgebohrt, so hält der Bohrkernhalter den Bohrkern, auch wenn von oben senkrecht nach unten gebohrt wird. Danach kann der Bohrkern zusammen mit der Bohrmaschine aus der Bohrung entnommen werden.

Mit dem erfindungsgemäßen Bohrkernhalter bzw. dem erfindungsgemäßen Hohlkernbohrverfahren unter Verwendung dieses Bohrkernhalters wird somit eine einfache und kostengünstige Möglichkeit geschaffen, die Sicherheit beim Kernbohren wesentlich zu erhöhen und das Entnehmen des Bohrkerns insgesamt zu vereinfachen. Der Bohrkernhalter ist als einzelnes Teil separat handelbar für gängige Bohrkronen bzw. Hohlkernbohrmaschinen, kann jedoch auch einer solchen Hohlkernbohrmaschine oder einer Bohrkrone beigelegt werden, um deren Nutzwert wesentlich zu steigern.

Fällt der Bohrkern nach dem vollständigen Durchbohren der Decke nach unten, so schlägt der Kernhaltestift mit seinem Anschlagabschnitt von oben gegen die nach innen vorspringende Auflagefläche an der Stiftaufnahmebohrung der Aufnahmehülse und fängt den Bohrkern damit auf.

Um die hierbei auftretenden Kräfte gering zu halten, ist es vorteilhaft, wenn der Abstand, den der Anschlagabschnitt von der Auflagefläche nach dem vollständigen Durchbohren des Bohrkerns hat, möglichst klein ist, wobei jedoch im Sinne des Kühlflüssigkeitsdurchtritts eine gewisse Untergrenze nicht unterschritten werden sollte. Vorteilhaft ist der Abstand des Befestigungsabschnitts von dem Anschlagabschnitt daher auf die durch die Länge des zylindrischen Mantels der Bohrkrone vorgegebene Bohrtiefe abgestimmt.

Weiterhin vorteilhaft ist es, wenn der Anschlagsabschnitt in axialer Richtung beweglich an dem Kernhaltestift angebracht ist. Dazu kann beispielsweise eine Mutter dienen, die den Anschlagsabschnitt bildet und auf einen am oberen Ende des Kernhaltestifts vorgesehenen Gewindebolzenabschnitt aufgeschraubt ist.

Nach dem Einstecken des Kernhaltestifts in die Stiftaufnahmebohrung der Aufnahmehülse kann dann die axiale Lage des Anschlagabschnitts am Kernhaltestift so eingestellt werden, dass der Anschlagabschnitt bei auf die gewünschte Tiefe vorgebohrtem Bohrkern auf der Auflagefläche aufliegt oder zumindest der Abstand zur Auflagefläche minimal ist. Wird nun durchgebohrt und fällt der Bohrkern nach unten, so ist die bis zum erneuten Anschlagen des Anschlagabschnitts an der Auflagefläche zurückgelegte Distanz so klein, dass keine Gefahr besteht, dass der Kernhaltestift aus seiner Verankerung am Bohrkern gerissen wird.

Vorteilhaft kann zwischen der Auflagefläche und dem Anschlagabschnitt ein Dämpfungselement eingebracht sein, beispielsweise eine Scheibe aus einem elastischen Kunststoff. Weiterhin vorteilhaft ist es, wenn die Auflagefläche an der Oberseite eines Axiallagers ausgebildet ist, welches mit seinem unteren Lagerteller auf einer nach oben weisenden Innenschulter an der Stiftaufnahmebohrung der Aufnahmehülse ausgebildet ist. Das Axiallager kann dabei als Gleitlager ausgebildet sein, beispielsweise als Scheibe aus einem gut gleitfähigen Kunststoff , oder als Wälzlager.

Insbesondere bei einem abnehmbaren Anschlagsabschnitt an dem Kernhaltestift ist es dabei vorteilhaft, wenn die Aufnahmehülse in ein Hülsenunterteil und ein Hülsenoberteil geteilt ist.

Denn dann kann der Kernhaltestift nicht nur von der dem Bohrkronenhalter zugewandten Seite her durch den Kühlmitteldurchtritt der Bohrkrone bei an die Bohrung angesetzter Bohrkrone gesteckt werden, sondern mit abgenommenem Anschlagabschnitt auch bei abgezogener Bohrkrone am Bohrkern befestigt werden, bevor die Bohrkrone über den Stift gesteckt und wieder an der Bohrung zum Durchbohren angesetzt wird. Das Hülsenunterteil kann dabei vor oder nach dem Wiederaufsetzen der Bohrkrone an der Bohrkrone befestigt werden und dann der Anschlagabschnitt auf die passende Höhe am Kernhaltestift aufgeschraubt werden. Der Kernhaltestift kann also als Gewindestift mit einer als Anschlagabschnitt fungierenden Mutter ausgebildet sein. Dabei kann der Gewindestift nach dem Aufschrauben der als Anschlagabschnitt fungierenden Mutter auch noch auf eine gewünschte Länge abgelängt werden, falls er sich als zu lang für die durch die Verfahrhöhe des Bohrmaschinenschlittens vorgegebene maximale Länge herausstellt.

Nach dem Befestigen bzw. Einschrauben des Kernhaltestifts an dem Bohrkern, dem Wiederaufsetzen der Bohrkrone und dem Befestigen des Hülsenunterteils an der Bohrkrone, steht der Kernhaltestift aus dem Hülsenunterteil heraus und ist somit zum Aufschrauben der als Anschlagabschnitt fungierenden Mutter frei zugänglich. Danach wird das Hülsenoberteil auf das Hülsenunterteil aufgesetzt und daran befestigt. Hierzu weisen das Hülsenoberteil und das Hülsenunterteil vorteilhaft Ringflansche mit Schraubenlöchern auf, an denen sie miteinander verschraubt werden können. Diese robuste Art der Verschraubung hat sich für die rauhe Einsatzumgebung am Bau, in der Hohlkernbohrmaschinen üblicherweise verwedet werden, als besonders geeignet erwiesen. Das Oberteil der Aufnahmehülse deckt dann den Überstand des Hülsenaufnahmestifts ab, so dass anschließend die Kernbohrmaschine mit dem Bohrkronenhalter auf den am Hülsenoberteil vorgesehenen Kupplungsabschnitt aufgesetzt und daran befestigt werden kann.

Weitere vorteilhafte Weiterbildungen der Erfindung werden anhand der in den beiliegenden Zeichnungen dargestellten Ausführungsform näher erläutert. Es zeigen:
- Fig.1: eine perspektivische Teilschnittansicht einer auf eine gewünschte Tiefe in eine Bodenplatte eingebohrten Bohrkrone mit einem daran montierten Bohrkernhalter gemäß einer Ausführungsform der Erfindung; und
- Fig.2: eine vergrößerte Ansicht eines Teilbereichs aus der in Fig.1 gezeigten Darstellung.

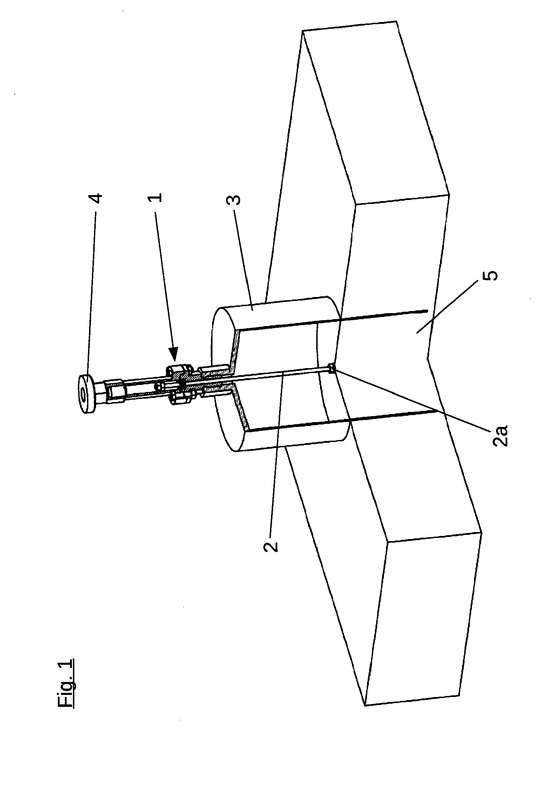

Zunächst wird Bezug genommen auf Figur 1. Dort erkennt man eine bis auf eine gewisse Resttiefe in eine Bodenplatte eingebohrte Bohrkrone 3 einer nicht näher dargestellten Hohlkernbohrmaschine. Ein Bohrkronenhalter 4 der Hohlkernbohrmaschine ist lediglich symbolisch angedeutet. Zwischen dem Bohrkronenhalter 4 und der Bohrkrone 3 ist eine insgesamt mit 1 bezeichnete Aufnahmehülse montiert, durch die ein Kernhaltestift 2 hindurch geführt ist. Der Kernhaltestift 2 kann in einer nicht dargestellten Bohrung mit einem darin aufgenommenen Dübel in dem mit 5 bezeichneten Bereich der Bodenplatte, der den Bohrkern 5 bildet, eingeschraubt und optional in einer mit 2a bezeichneten am Bohrkern 5 aufgeklebten Klemmhülse eingeklemmt sein. Die Aufnahmehülse 1 und der Kernhaltestift 2 bilden somit insgesamt den Bohrkernhalter.

Man kennt aus der Figur 1 die von der Oberseite des Bohrkronenhalters 4 nach unten durch die Aufnahmehülse 1 und ein Anschlussstück der Bohrkrone 3 auf der Drehachse verlaufende Kühlmittelleitung, durch die das maschinenseitig zugeführte Kühlmittel bzw. die maschinenseitig zugeführte Kühlflüssigkeit in den ringförmigen Zerspanungsbereich um den Bohrkern 5 herum geleitet wird. Ein radialer Abstand zwischen einem zylindrischen Mantel der Bohrkrone mit der unterseitigen Zerspanungssegmentierung und dem Anschlussstück bzw. Kupplungsabschnitt der Bohrkrone wird dabei von einem ringförmigen Verbindungsabschnitt überbrückt.

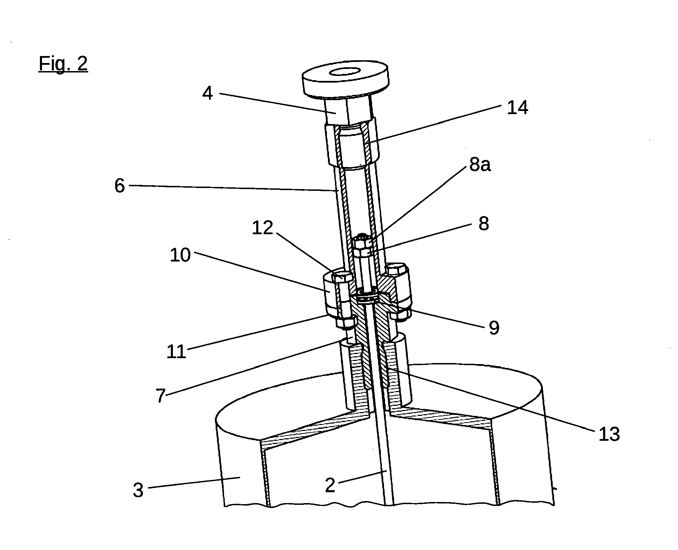

Die Einzelheiten des Bohrkernhalters gemäß der dargestellten Ausführungsform sind insbesondere der Figur 2 zu entnehmen. Man erkennt, dass die Aufnahmehülse 1 aus einem Hülsenunterteil 7 und einem damit verschraubten Hülsenoberteil 6 besteht. Das Hülsenunterteil 7 ist mit einem als Gewindebolzen ausgebildeten Gegenkupplungsabschnitt 13 in die standardmäßig als Gewindebohrung ausgebildeten Kühlmittelbohrung der Bohrkrone 3 eingeschraubt. An seiner Oberseite weist das Hülsenunterteil 7 einen mit Schraubbohrungen versehenen Ringflansch 11 auf, dem ein entsprechender Ringflansch 10 an der Unterseite des Hülsenoberteils 6 zugeordnet ist. Die beiden Hülsenteile 6, 7 sind über ihre Ringflansche 10, 11 und mit 12 bezeichnete Schrauben und nicht näher bezeichnete Muttern miteinander verschraubt. Am oberen Ende des Hülsenoberteils 6 ist eine als Gewindebohrung ausgebildeter Kupplungsabschnitt 14 zur Befestigung an dem Gegenkupplungsabschnitt des Bohrkronenhalters 4 vorgesehen, der gewindemäßig den Kupplungsabschnitt der Bohrkrone 3 entspricht. Die Ausbildung des Kupplungsabschnitts 14 und des Gegenkupplungsabschnitts 13 hängt dabei von der Normung der Schnittstelle von Bohrkrone und Bohrkronenhalter ab und kann entsprechend adaptiert werden.

An der die Aufnahmehülse 1 durchdringenden Stiftaufnahmebohrung, in der der Kernhaltestift 2 eingesteckt ist, ist dabei nahe des oberen Endes des Hülsenunterteils 7 eine zum Bohrkronenhalter 4 hin weisende Innenschulter vorgesehen, an der sich die Stiftaufnahmebohrung bis auf den Innendurchmesser des Hülsenoberteils 6 weitet. Auf der Innenschulter liegt ein Axiallager 9 mit seinem unteren Lagerteller auf. An der Oberseite seines oberen Lagertellers befindet sich eine dem Kupplungsabschnitt 14 zugewandte, in Radialrichtung nach innen vorspringende Auflagefläche, an der der Kernhaltestift 2 mit seinem mit 8 bezeichneten Anschlagabschnitt zur Auflage kommt, wenn aus der in Figur 1 gezeigten Stellung weiter gebohrt wird, bis der Bohrkern 5 vollständig ausgebohrt ist und der Bohrkern 5 dann den Kernhaltestift 2 nach unten zieht. Der Anschlagsabschnitt 8 des Kernhaltestifts 2 ist dabei als eine auf einen oberseitigen Gewindebolzenabschnitt des Kernhaltestifts 2 aufgeschraubte Mutter 8 ausgebildet, die in ihrer gewünschten axialen Lage über eine Kontermutter 8a festgelegt ist.

Die axiale Lage der Mutter 8 ist dabei vorteilhaft so gewählt, dass in der in Figur 1 gezeigten Stellung ein gewisser Abstand zur Auflagefläche besteht, so dass zumindest noch eine gewisse Menge vom Bohrkronenhalter 4 kommendes Kühlwasser an der Mutter 8 und dem Lager 9 vorbei in einen Zwischenraum zwischen dem Kernhaltestift 2 und der Stiftaufnahmebohrung am Hülsenunterteil 7 und von dort weiter durch den Kupplungsabschnitt der Bohrkrone 3 hindurch in den ringförmigen Zerspanungsbereich gelangen kann. Hierzu hat der Kernhaltestift 2 eine gewisses radiales Spiel in der Stiftaufnahmebohrung am Hülsenunterteil.

Abwandlungen und Modifikationen der gezeigten Ausführungsform sind möglich, ohne den Rahmen der Erfindung zu verlassen.

So könnten die Lagerteller des Axiallagers Löcher aufweisen, um den Kühlflüssigkeitsdurchtritt zu optimieren.

## Patentansprüche

1. Bohrkernhalter für eine Hohlkernbohrer-Bohrkrone (3), welche an ihrem einen Axialende einen Kupplungsabschnitt zur drehschlüssigen Befestigung an einem Gegenkupplungsabschnitt eines bohrmaschinenseitigen Bohrkronenhalters (4) aufweist, einen ringzylindrischen Mantel mit einer Anzahl Zerspanungssegmenten an ihrem anderen Axialende, einen den radialen Abstand des ringzylindrischen Mantels zum Kupplungsabschnitt überbrückenden Ringabschnitt, und einen drehachszentrischen Kühlmitteldurchtritt, über welchen durch den Bohrkronenhalter (4) hindurch bohrmaschinenseitig zugeführtes Kühlmittel zu der ringförmig um einen Bohrkern (5) herum angreifenden Anzahl Zerspanungssegmenten geleitet werden kann, mit:
einem Kernhaltestift (2), welcher an seinem einen Ende einen Befestigungsabschnitt zur Befestigung am Bohrkern (5) aufweist, beispielsweise einen Gewindebolzenabschnitt zum Einschrauben in einen am Bohrkern (5) eingebrachten Dübel und/oder eine dort befestigte Mutter (2a), und mit
einer bohrkronenseitig befestigbaren Aufnahmehülse (1), welche eine Stiftaufnahmebohrung für den Kernhaltestift (2) aufweist, die bei bohrkronenseitig befestigter Aufnahmehülse (1) mit dem Kühlmitteldurchtritt der Bohrkrone (3) fluchtet, und in der der eingesteckte Kernhaltestift (2) bei bohrkronenseitig befestigter Aufnahmehülse (1) gegen ein Herausrutschen zum Bohrkern (5) hin gesichert aufgenommen ist.

2. Bohrkernhalter nach Anspruch 1, wobei die Aufnahmehülse (1) einerseits einen Gegenkupplungsabschnitt (13) zur Befestigung an dem Kupplungsabschnitt der Bohrkrone (3) aufweist, beispielsweise einen Gewindebolzenabschnitt, und andererseits einen Kupplungsabschnitt (14) zur Befestigung an dem Gegenkupplungsabschnitt (14) des Bohrkronenhalters (4), beispielsweise einen Gewindebohrungsabschnitt.

3. Bohrkernhalter nach Anspruch 1 oder 2, wobei die Stiftaufnahmebohrung eine bei bohrkronenseitig befestigter Aufnahmehülse (1) dem Bohrkern (5) abgewandte, sich mit Radialkomponente ringförmig erstreckende Gegenanschlagsfläche aufweist, und der Kernhaltestift (2) einen sich bei in die Stiftaufnahmebohrung eingestecktem Kernhaltestift (2) der Gegenanschlagsfläche zugewandten Anschlagabschnitt (8), welcher bei in die Aufnahmehülse (1) eingestecktem Kernhaltestift (2) den Kernhaltestift (2) am Herausrutschen zum Bohrkern (5) hin hindert.

4. Bohrkernhalter nach Anspruch 1, 2, oder 3, wobei ein Axiallager (9) mit seinem unteren Lagerteller auf einer dem Kupplungsabschnitt (14) der Aufnahmehülse (1) zugewandten Innenschulter in der Stiftaufnahmebohrung aufliegt und die Gegenanschlagsfläche für den Anschlagabschnitt (8) des Kernhaltestifts (2) an der Oberseite seines oberen Lagertellers vorgesehen ist.

5. Bohrkernhalter nach einem der Ansprüche 1 bis 4, wobei die Aufnahmehülse (1) ein an der Bohrkrone (3) befestigbares Hülsenunterteil (7) und ein an dem Bohrkronenhalter (4) befestigbares Hülsenoberteil (6) aufweist, wobei die Gegenanschlagsfläche am Hülsenunterteil (7) vorgesehen ist und wobei insbesondere das Hülsenoberteil (6) auf seiner dem Hülsenunterteil (7) zugewandten Seite einen umlaufenden Ringflansch (10) mit Durchgangsbohrungen aufweist und das Hülsenunterteil (7) auf seiner dem Hülsenoberteil (6) zugewandten Seite einen entsprechenden umlaufenden Ringflansch (11) mit entsprechenden Durchgangsbohrungen, wobei Schrauben (12) mit passenden Muttern vorgesehen sind, um das Hülsenoberteil (6) auf mit dem Hülsenunterteil (7) zu verbinden.

6. Bohrkernhalter nach einem der vorhergehenden Ansprüche, wobei der Kernhaltestift (2) einen oberseitigen Gewindebolzenabschnitt aufweist, und der Anschlagabschnitt (8) des Kernhaltestifts (2) als auf den oberseitigen Gewindebolzenabschnitt aufgeschraubte Mutter (8) ausgebildet ist, wobei der Kernhaltestift (2) insbesondere als durchgängig mit einem Gewinde versehener Gewindestift (2) ausgebildet ist, oder als Stiftschraube mit dem oberseitigen Gewindebolzenabschnitt, einem unterseitigen Gewindebolzenabschnitt und einem die beiden Gewindebolzenabschnitt verbindenden Schaftabschnitt.

7. Bohrkernhalter nach einem der vorhergehenden Ansprüche, wobei der Kernhaltestift (2) in seinem durch die Stiftaufnahmebohrung steckbaren Abschnitt einen Durchmesser von beispielsweise 6 mm aufweist, der um einige Millimeter kleiner ist als der Durchmesser der Kühlmittelbohrung eines handelsüblichen Bohrkronenhalter (3), welcher beispielsweise bei in etwa 10,5 mm liegt.

8. Bohrkernhalter nach einem der vorhergehenden Ansprüche, wobei der als Gewindebolzenabschnitt ausgebildete Gegenkupplungsabschnitt (13) ein M30-Außengewinde aufweist und der als Gewindebohrungsabschnitt ausgebildete Kupplungsabschnitt (14) ein M30-Innengewinde, oder der als Gewindebolzenabschnitt ausgebildete Gegenkupplungsabschnitt ein 1 1/4-Zoll-UNC-Außengewinde aufweist und der als Gewindebohrungsabschnitt ausgebildete Kupplungsabschnitt ein 1 1/4-Zoll-UNC-Innengewinde.

9. Hohlkernbohrverfahren unter Verwendung eines Bohrkernhalters nach einem der vorhergehenden Ansprüche, mit den folgenden Schritten:
Montieren einer Hohlkernbohrermaschine über einem als auszubohrender Bohrkern (5) vorgesehenen Bodenabschnitt und Anbohren des als auszubohrender Bohrkern (5) vorgesehenen Bodenabschnitts bis auf eine gewünschte Tiefe mit einer an einem maschinenseitigen Bohrkronenhalter (4) befestigten Bohrkrone (3),
Lösen der Befestigung der Bohrkrone (3) an dem Bohrkronenhalter (4) und Abnehmen der Hohlkernbohrmaschine von der Bohrkrone (3),
Befestigen des Kernhaltestifts (2) des Bohrkernhalters mit seinem axialendseitigen Befestigungsabschnitt in einer zuvor am Bohrkern (5) geschaffenenen, zentrischen Befestigungsmöglichkeit für einen Kernhaltestift (2), beispielsweise Einschrauben eines als axialendseitiger Befestigungsabschnitt fungierenden Gewindebolzenabschnitts in einen in einer zentrischen Bohrung angebrachten Dübel,
bohrkronenseitiges Befestigen der Aufnahmehülse (1) des Bohrkernhalters, bevorzugt bei in der Stiftaufnahmebohrung aufgenommenem Kernhaltestift (2) oder mit einem nachträglichen Einstecken des Kernhaltestifts (2) in die Stiftaufnahmebohrung und einem nachträglich erfolgenden Verfahrensschritt des Befestigens des Kernhaltestifts (2) am Bohrkern,
Aufsetzen der Kernbohrmaschine mit ihrem Bohrkronenhalter (4) auf die Aufnahmehülse (1) des Bohrkernhalters und bohrkronenhalterseitiges Befestigen der Aufnahmehülse (1),
Ausbohren des Bohrkerns (5) bei daran befestigtem Kernhaltestift (2).

10. Hohlkernbohrverfahren nach Anspruch 9, wobei die Aufnahmehülse (1) ein an der Bohrkrone (3) befestigbares Hülsenunterteil (7) und ein an dem Bohrkronenhalter (4) befestigbares Hülsenoberteil (6) aufweist, wobei die Gegenanschlagsfläche am Hülsenunterteil (7) vorgesehen ist, und der Kernhaltestift (2) einen abnehmbaren Anschlagabschnitt (8) aufweist, beispielsweise eine abschraubbare Mutter (8), wobei die Bohrkrone (3) vor dem Befestigen des Kernhaltestifts (2) am Bohrkern aus der Bohrung entnommen wird, und dann der der Kernhaltestift (2) mit abgenommenem Anschlagabschnitt (8) am Bohrkern (5) befestigt wird, und dann die Bohrkrone (3) über den Kernhaltestift (2) gesteckt und wieder an die Bohrung angesetzt wird, und nach dem Befestigen des Hülsenunterteils (7) an der Bohrkrone (3) der Anschlagabschnitt (8) aufgesetzt wird, wonach ein Aufschrauben des Hülsenoberteils (7) auf das Hülsenunterteil (7) folgt, bevor der Verfahrensschritt des Aufsetzens der Kernbohrmaschine mit ihrem Bohrkronenhalter (4) auf das Hülsenoberteil (7) der Aufnahmehülse (1) und die Befestigung des Bohrkronenhalters (4) daran erfolgt.
